(19) Europäisches Patentamt
European Patent Office
Office européen des brevets

(11) **EP 2 357 634 A2**

(12) **EUROPEAN PATENT APPLICATION**

(43) Date of publication:
**17.08.2011 Bulletin 2011/33**

(51) Int Cl.:
***G09G 3/32*** *(2006.01)*

(21) Application number: **10191305.1**

(22) Date of filing: **16.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.11.2009 KR 20090110784**

(71) Applicant: **Samsung Mobile Display Co., Ltd.**
**Yongin-City**
**Gyunggi-do (KR)**

(72) Inventors:
• **Yun, Su-Yeon**
  **Yongin-City**
  **Gyunggi-Do (KR)**
• **Park, Sung-Cheon**
  **Cheonan-si (KR)**

(74) Representative: **Gulde Hengelhaupt Ziebig & Schneider**
**Patentanwälte - Rechtsanwälte**
**Wallstrasse 58/59**
**10179 Berlin (DE)**

(54) **DC-DC converter and organic light emitting display device using the same**

(57)     A DC-DC converter and an organic light emitting display device using the same. Here, a DC-DC converter (500) is provided with a voltage sensor (400) for sensing a battery voltage outputted from a battery (700). A regulator (510) receives the battery voltage from the battery (700). When the battery voltage is a set value or less, the regulator (510) is stopped from bypassing the battery voltage. When the voltage of the inputted power source exceeds the set value, the regulator (510) is driven to lower the battery voltage. When the battery voltage is the set value or less, a controller (600) controls the driving of the regulator (510). A power generator receives the regulated battery voltage to output a first pixel power source and a second pixel power source.

FIG. 2

**Description**

**BACKGROUND**

**1. Field**

The following description relates to a DC-DC converter and an organic light emitting display device comprising the same.

**2. Description of the Related Art**

Recently, there have been various types of flat panel display devices that are lighter in weight and smaller in volume than comparable cathode ray tubes. These flat panel display devices include a liquid crystal display device, a field emission display device, a plasma display panel, an organic light emitting display device, and the like.

Among the flat panel display devices, the organic light emitting display device displays images using an organic light emitting diode (OLED) in which luminance of light is determined corresponding to an amount of current inputted to the OLED.

The organic light emitting display device has various desirable characteristics, such as excellent color reproduction, a thin thickness and the like. Accordingly, its application fields have been widely extended to such fields as mobile phones, PDAs, MP3 players and the like.

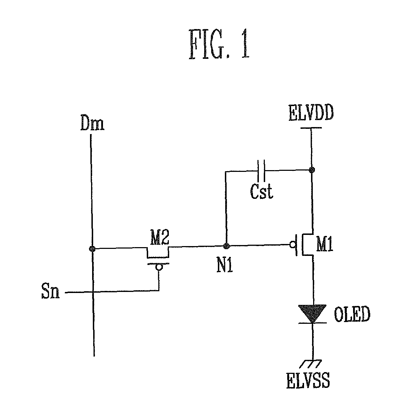

FIG. 1 is a circuit diagram of a pixel used in a general organic light emitting display device.

Referring to FIG. 1, the pixel includes a first transistor M1, a second transistor M2, a capacitor Cst and an organic light emitting diode OLED.

The first transistor M1 has a source electrode coupled to a first pixel power source ELVDD, a drain electrode coupled to an anode electrode of the organic light emitting diode OLED, and a gate electrode coupled to a first node N1. The second transistor M2 has a source electrode coupled to a data line Dm, a drain electrode coupled to the first node N1, and a gate electrode coupled to a scan line Sn. The capacitor Cst has a first electrode coupled to the drain electrode of the first transistor M1 and a second electrode coupled to the first node N1. The organic light emitting diode OLED has an anode electrode coupled to the drain electrode of the first transistor M1 and a cathode electrode coupled to a second pixel power source ELVSS.

In the pixel configured as described above, current flows from the first transistor M1 to the organic light emitting diode OLED in response to the voltage at the first node N1, so that the organic light emitting diode OLED emits light. The current flowing into the organic light emitting diode OLED is expressed by the following Equation 1.

$$\text{IOLED} = \beta/2(\text{Vgs-Vth})2 = \beta/2(\text{ELVDD-Vdata-Vth})2 \quad \ldots\ldots(1)$$

Here, IOLED denotes current flowing into the organic light emitting diode (OLED), Vgs denotes a voltage between the source and gate electrodes of the first transistor M1, Vth denotes a threshold voltage of the first transistor M1, ELVDD denotes a voltage of the first pixel power source, Vdata denotes a voltage of a data signal, and $\beta$ denotes a constant.

That is, the current flowing into the organic light emitting diode OLED flows in response to the data signal and the voltage of the first pixel power source ELVDD.

A large-capacity battery is used to prolong its use-time. However, if the capacity of a battery is large, the output voltage of the battery is also increased. At this time, a DC-DC converter for supplying the first pixel power source ELVDD boosts the output voltage of the battery. Here, the more the output voltage of the battery is increased, the more the voltage boosted in the DC-DC converter is increased, and therefore, the more the voltage of the first pixel power source ELVDD is increased. If the voltage of the first pixel power source ELVDD is increased, the current flowing into the organic light emitting diode OLED is changed as described in Equation 1. Therefore, the luminance of the organic light emitting diode OLED becomes higher than a set or predetermined luminance.

When the output voltage of the battery is higher than the voltage of the first pixel power source ELVDD outputted from the DC-DC converter, the efficiency of the DC-DC converter is decreased.

**SUMMARY**

Aspects of embodiments of the present invention are directed toward a DC-DC converter which can use a high-capacity battery by allowing the voltage of a first pixel power source to be outputted constantly regardless of the voltage inputted to the DC-DC converter, and an organic light emitting display device using the DC-DC converter.

Aspects of embodiments of the present invention are directed toward a DC-DC converter capable of being driven for a long period of time using a large-capacity battery and an organic light emitting display device using the same.

According to an embodiment of the present invention, there is provided a sensor, DC-DC converter and controller system comprising: a voltage sensor for sensing a battery voltage from a battery; a regulator for receiving the battery voltage from the battery, the regulator being configured not to bypass the battery voltage from the battery when the battery voltage is a set value or less, and the regulator being configured to lower the battery voltage when the battery voltage exceeds the set value; a controller for controlling the regulator when the battery voltage is the set value or less; and a power generator for receiving the battery voltage to output a voltage of a first pixel power source and a voltage of a second pixel power source.

According to another embodiment of the present invention, there is provided an organic light emitting display device including: a pixel unit for receiving a data signal, a scan signal, a voltage of a first pixel power source and a voltage of a second pixel power source to express an image; a data driver for supplying the data signal; a scan driver for supplying the scan signal; and a sensor, DC-DC converter and controller system for supplying the voltage of the first pixel power source and the voltage of the second pixel power source. Here, the sensor, DC-DC converter and controller system includes: a voltage sensor for sensing a battery voltage from a battery; a regulator for receiving the battery voltage from the battery, the regulator being configured not to bypass the battery voltage from the battery when the battery voltage is a set value or less, and the regulator being configured to lower the battery voltage when the battery voltage exceeds the set value; a controller for controlling the regulator when the battery voltage is the set value or less; and a power generator for receiving the battery voltage to output a voltage of a first pixel power source and a voltage of a second pixel power source.

According to yet another embodiment of the present invention, there is provided a DC-DC converter of an organic light emitting display device including: a booster for receiving a battery voltage from a battery to output a voltage of a first pixel power source; an inverter for receiving the battery voltage from the battery to generate a voltage of a second pixel power source by inverting the battery voltage; and a regulator configured not to bypass the battery voltage from the battery to the booster when the battery voltage is a set value or less, and configured to lower the battery voltage before passing the battery voltage to the booster when the battery voltage exceeds the set value.

Here, according to embodiments of the present invention, in a DC-DC converter and an organic light emitting display device using the same, the voltage outputted from the DC-DC converter is constant (is kept substantially constant) regardless of the voltage inputted to the DC-DC converter, and hence, the voltage of a first power source is not changed. Therefore, although a large-capacity battery is used, the amount of current flowing into an organic light emitting diode is not changed.

## BRIEF DESCRIPTION OF THE DRAWINGS

The accompanying drawings, together with the specification, illustrate exemplary embodiments of the present invention, and, together with the description, serve to explain the principles of the present invention.

FIG. 1 is a circuit diagram of a pixel used in a general organic light emitting display device.

FIG. 2 is a block diagram schematically illustrating the structure of an organic light emitting display device according to an embodiment of the present invention.

FIG. 3 is a block diagram illustrating the structure of a power generator illustrated in FIG. 2.

## DETAILED DESCRIPTION

Hereinafter, certain exemplary embodiments according to the present invention will be described with reference to the accompanying drawings. Here, when a first element is described as being coupled to a second element, the first element may be not only directly coupled to the second element but may also be indirectly coupled to the second element via one or more third elements. Further, some of the elements that are not essential to the complete understanding of the invention are omitted for clarity purposes. Also, like reference numerals refer to like elements throughout.

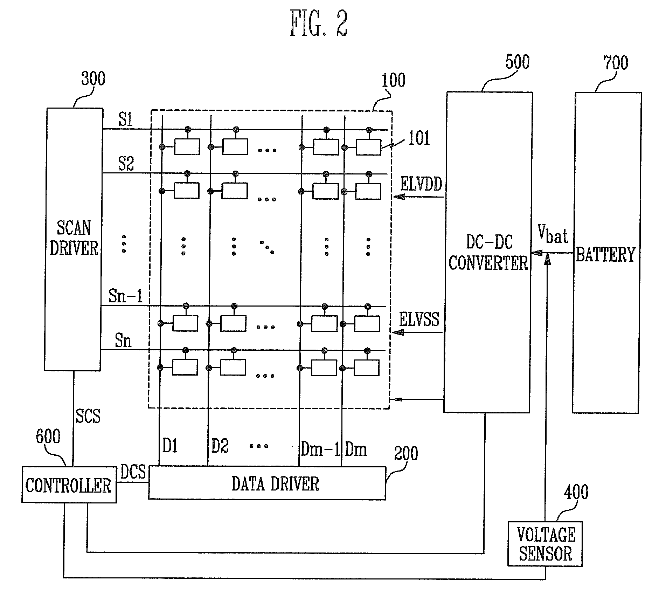

FIG. 2 is a block diagram schematically illustrating the structure of an organic light emitting display device according to an embodiment of the present invention.

Referring to FIG. 2, the organic light emitting display device includes a pixel unit (or display region) 100, a data driver 200, a scan driver 300, a voltage sensor 400, a DC-DC converter 500, a controller 600 and a battery 700.

The pixel unit 100 includes a plurality of pixels 101, a plurality of data lines D1, D2, ..., Dm-1 and Dm for supplying data signals to the pixels 101, and a plurality of scan lines S1, S2, ..., Sn-1 and Sn for supplying scan signals to the pixels 101. The pixel unit 100 further includes first and second pixel power source lines that respectively supply voltages of first and second pixel power sources ELVDD and ELVSS for driving the pixels 101. Here, the second pixel power source line may be implemented in the form of a layer that covers the entire surface of the pixel unit 100.

The data driver 200 generates data signals and supplies the generated data signals to the data lines D1, D2, ..., Dm-1 and Dm.

The scan driver 300 generates scan signals and supplies the generated scan signals to the scan lines S1, S2, ..., Sn-1 and Sn. The data signals are supplied to the pixels 101 to which the scan signals are supplied.

The voltage sensor 400 senses a battery voltage Vbat outputted from the battery 700.

The DC-DC converter 500 generates the voltage of the first pixel power source ELVDD and the voltage of the second pixel power source ELVSS using the battery voltage Vbat outputted from the battery 700. If the battery voltage Vbat is higher than the set or predetermined voltage of the first pixel power source ELVDD, the DC-DC converter 500 lowers the battery voltage Vbat and then generates the voltage of the first pixel power source ELVDD. If the battery voltage Vbat is in a range of the set or predetermined voltage of the first pixel power source ELVDD, the DC-DC converter 500 boosts the battery voltage Vbat and then generates the voltage of the first pixel power source ELVDD. The second pixel power source ELVSS is generated by inverting the battery voltage Vbat or the voltage obtained by lowering the battery voltage Vbat.

The controller 600 controls the DC-DC converter 500 based on the battery voltage Vbat sensed by the voltage sensor 400. That is, if the battery voltage Vbat sensed by the voltage sensor 400 is at a set or predetermined first value or more, the controller 600 controls the DC-DC converter 500 to generate the voltage of the first pixel power source ELVDD by lowering and then boosting the battery voltage Vbat. If the battery voltage Vbat sensed by the voltage sensor 400 is at a set or predetermined second value or less, the controller 600 controls the DC-DC converter 500 to generate the voltage of the first pixel power source ELVDD by boosting the battery voltage Vbat. In one embodiment, the set or predetermined first value is the same as the set or predetermined second value. In another embodiment, the set or predetermined first and second values are different values, the set or predetermined second value being lower than the first value. The voltage of second pixel power source ELVSS is generated by inverting the battery voltage Vbat or the voltage obtained by lowering the battery voltage Vbat.

The controller 600 generates a data drive control signal and a scan drive control signal to control the data driver 200 and the scan driver 300.

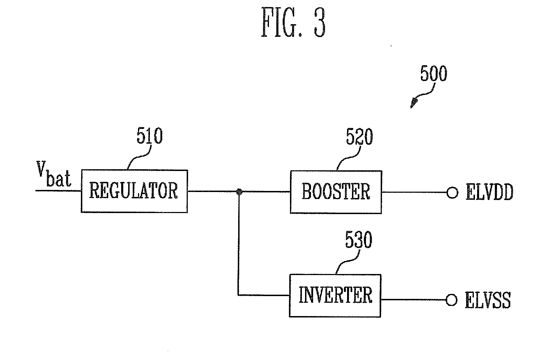

FIG. 3 is a block diagram illustrating the structure of a power generator illustrated in FIG. 2.

Referring to FIG. 3, the DC-DC converter 500 includes a regulator 510, a booster 520 and an inverter 530.

If the battery voltage Vbat outputted from the battery 700 is lower than a set or predetermined value, e.g., lower than 4.5V, or in a set or predetermined range, e.g., between 2.9 and 4.5V, the driving of the regulator 510 is stopped by the controller 600 so that the battery voltage Vbat is bypassed and then supplied to the booster 520. If the battery voltage Vbat outputted from the battery 700 exceeds the set or predetermined range, e.g., above 4.5V, the regulator 510 is driven by the controller 600 so that the battery voltage Vbat is lowered to a voltage of 4.5V and then outputted. A low drop regulator (LDO) may be used as the regulator 510.

The booster 520 generates the voltage of the first pixel power source ELVDD by receiving the battery voltage Vbat outputted from the battery or the voltage outputted from the regulator 510 and then boosting the received voltage. The voltage of the first pixel power source ELVDD outputted from the booster 520 is 4.6V. When the voltage inputted to the booster 520 is higher than that outputted from the booster 520, the efficiency of the booster 520 is reduced. Therefore, the booster 520 generates the voltage of the first pixel power source ELVDD using the voltage inputted from the regulator 510, which is lower than the battery voltage Vbat, e.g., by about 0.1V.

The inverter 530 generates the second pixel power source ELVSS by inverting the battery voltage Vbat outputted from the battery 700 or the voltage outputted from the regulator 510. Here, the inverter 530 determines an output value regardless of the inputted voltage.

The booster 520 and the inverter 530 may be formed into an integrated circuit (IC), e.g., may be integrally provided.

**Claims**

1.  A DC-DC converter for an organic light emitting display device, the DC-DC converter comprising:

    a regulator adapted to receive a battery voltage from a battery connectable or connected to the DC-DC converter and to output an output voltage lower than the battery voltage in response to a first control signal;
    a booster having an input connected to an output of the regulator and adapted to generate a voltage of a first pixel power source; and
    an inverter having an input connected to the output of the regulator and adapted to generate a voltage of a second pixel power source by inverting the battery voltage.

2.  The DC-DC converter according to claim 1, wherein the regulator is adapted to bypass the battery voltage from the battery in response to a second control signal.

3. The DC-DC converter according to one of the claims 1 or 2, wherein the regulator is a low drop regulator (LDO).

4. A power supply unit for an organic light emitting display device, the power supply comprising:

> a voltage sensor adapted to sense a battery voltage from a battery connectable or connected to the power supply unit;
> a DC-DC converter according to one of the preceding claims, anda controller connected to the voltage sensor and adapted to compare the sensed battery voltage received from the voltage sensor to a set value and to output the first and/or second control signals to the DC-DC converter in accordance with a result of the comparison.

5. An organic light emitting display device comprising:

> a pixel unit adapted to receive a data signal, a scan signal, a voltage of a first pixel power source and a voltage of a second pixel power source and to display an image in correspondence with the data signal and the scan signal;
> a data driver adapted to supply the data signal;
> a scan driver adapted to supply the scan signal; and
> a power supply unit according to claim 4 and adapted to supply the voltage of the first pixel power source and the voltage of the second pixel power source to the pixel unit.

FIG. 1

# FIG. 2

# FIG. 3